# FASCICULE DE BREVET EUROPEEN

(11) **EP 1 746 532 B1**
(45) Date de publication et mention de la délivrance du brevet: **26.03.2008**
(21) Numéro de dépôt: 06291131.8
(22) Date de dépôt: 10.07.2006
(51) Int. Cl.: G06K 19/18

(54) **Procede d'identification d'un capteur matriciel infrarouge**
Verfahren zur Identifizierung eines Infrarot-Matrixsensors
Method for identifying an infrared matrix sensor

(30) Priorité: 22.07.2005 FR 0507847
(43) Date de publication de la demande: 24.01.2007
(73) Titulaire: SAGEM DEFENSE SECURITE, 75015 Paris (FR)
(72) Inventeur: Pruvot, Henri c/o Sagem Défense Sécurité, 75015 Paris (FR); Ruocco-Angari, Bernard c/o Sagem Défense Sécurité, 75015 Paris (FR)
(74) Mandataire: Bérogin, Francis

(56) Documents cités:
- DE-A1- 3 629 009
- US-A1- 2005 006 481

## Description

La présente invention concerne le domaine des capteurs matriciels infrarouges, et elle concerne plus particulièrement des perfectionnements apportés dans le domaine de l'identification de tels capteurs notamment aux fins de leur traçabilité.

Les capteurs matriciels infrarouges sont des composants qui entrent dans la constitution de dispositifs stratégiques tels que des caméras infrarouges, des dispositifs autodirecteurs pour des missiles ou armes analogues, des dispositifs de visée pour des armes de tir, etc.

En vue d'empêcher la prolifération des technologies sensibles, des états (tels que la France, les USA, ...) fabricants de capteurs matriciels infrarouges et/ou fabricants de matériels intégrant de tels capteurs ont édicté des dispositions réglementaires visant à ce que tous les capteurs matriciels infrarouges fabriqués ou importés sur leur territoire soient identifiés de façon certaine pour permettre leur traçabilité.

A cette fin, l'identification de chaque capteur matriciel a été faite jusqu'à présent par un marquage extérieur, notamment mécanique, ou par un marquage interne au moyen de logiciels incorporés dans le capteur. Toutefois, l'inconvénient de la pratique actuelle réside dans la possibilité, pour un tiers, d'avoir accès au marquage et alors dans la possibilité de falsification, d'altération ou de suppression pure et simple du marquage (notamment pour le marquage extérieur), de sorte que la traçabilité du capteur ne peut pas être assurée avec rigueur.

Par ailleurs, les capteurs matriciels infrarouges produits jusqu'à présent sont du type refroidi et nécessitent la mise en oeuvre d'un appareillage cryostatique permettant leur exploitation. Ces appareillages cryostatiques constituent une contrainte sévère qui limite considérablement les applications de ces composants, qui restent essentiellement limités à des applications militaires. Dans ces conditions, les problèmes de traçabilité concernent un nombre relativement limité de capteurs, qui, au surplus, se rencontrent dans des matériels relativement surveillés.

Par contre, l'évolution des techniques fait que l'on est en mesure aujourd'hui de fabriquer ou d'envisager la fabrication de capteurs matriciels infrarouges non refroidis. La simplification considérable de la mise en oeuvre des capteurs non refroidis laisse présager une extension considérable de leurs domaines d'emploi et il est prévisible que ces composants vont trouver dans un avenir rapproché des applications au sein de matériels de très grande diffusion. A ce moment, rien n'empêchera qu'un capteur équipant un matériel couramment disponible soit prélevé pour être réemployé dans des dispositifs sensibles tels que des armements, et les systèmes de marquage actuels, insuffisamment fiables, ne permettront pas d'assurer une traçabilité efficace de ce type de capteur.

Il est déjà connu d'utiliser les caractéristiques de la surface d'une carte à puce pour identifier cette carte (voir US-A-2005/0006481), et d'enregistrer la position des éléments défectueux d'une matrice d'un capteur d'images (voir DE-A-3629009).

L'invention a essentiellement pour but de proposer une solution perfectionnée et simple qui permette de donner entièrement satisfaction aux exigences de la pratique en matière de traçabilité quel que soit le type de capteur, refroidi ou non refroidi.

A ces fins, l'invention propose un procédé d'identification d'un capteur matriciel infrarouge, selon lequel, pour au moins certains des pixels de la matrice du capteur, on relève une information relative à la position du pixel dans la matrice et on détermine une information relative à au moins une caractéristique de chacun desdits pixels et on tient en mémoire l'ensemble des couples de ces informations associées auxdits pixels respectifs (ou cartographie) en tant qu'identifiant ou signature du capteur.

Ainsi, chaque capteur matriciel infrarouge peut être suivi grâce à un identifiant ou signature qui n'est autre que sa caractérisation physique. Toute tentative de modification du capteur pour l'adapter à une signature différente de la sienne propre nécessiterait une modification physique du capteur, modification qui serait destructrice. Inversement, l'analyse des caractéristiques physiques d'un capteur non identifié permet, par comparaison avec la signature tenue en mémoire notamment par les fabricants, de retrouver l'origine du capteur et de faciliter la reconstitution de cheminement.

Au surplus, on notera qu'il peut être possible de mener à bien une reconnaissance de signature même si le capteur est partiellement endommagé.

Par caractéristique, on entend désigner une grandeur propre au pixel soit par sa nature -par exemple l'état défectueux ou actif du pixel-, soit par son niveau ou valeur -par exemple la valeur du gain du pixel, la valeur d'offset du pixel, le niveau de bruit du pixel, etc-. Certes la nature et/ou la valeur de la caractéristique ne sera pas propre au pixel considéré. Mais la cartographie (c'est-à-dire l'ensemble des couples information de position + information de caractéristique des pixels respectifs dans la matrice du capteur) élaborée à partir de cette caractéristique peut, elle, soit être propre au capteur incluant lesdits pixels et cette cartographie est alors représentative de ce seul capteur, soit être propre à un groupe de capteurs (par les capteurs provenant d'un fournisseur donné). Dans les deux cas, la représentativité de la cartographie vis-à-vis d'un capteur ou d'un groupe de capteurs est biunivoque avec un facteur de certitude très élevé dès lors que le nombre de pixels concernés par cette cartographie est suffisamment important.

Par mesure de sécurité, il est préférable que la cartographie tenue en mémoire soit codée, ce codage pouvant être effectué de toute manière appropriée avec toute complexité souhaitée, de manière à réduire la possibilité qu'un tiers non autorisé ait accès à la cartographie.

Il est possible de faire en sorte que la cartographie concerne la totalité des pixels de la matrice possédant la caractéristique. Ainsi, par exemple si la caractéristique sélectionnée est l'état défectueux du pixel, alors on relève et on tient en mémoire la cartographie de la totalité des pixels défectueux présents dans la matrice du capteur ; si la caractéristique sélectionnée est le gain ou le niveau de bruit du pixel, alors la cartographie relevée et tenue en mémoire englobe la totalité des pixels de la matrice du capteur.

Toutefois, dans un but de simplification et de rapidité du processus d'identification d'un capteur ainsi que pour réduire le volume des données à tenir en mémoire, il peut s'avérer plus judicieux que la cartographie concerne seulement certains, choisis en emplacement, des pixels de la matrice possédant ladite caractéristique. Les emplacements des pixels sélectionnés dans la matrice peuvent être choisis de façon aléatoire ou au contraire selon toute loi plus ou moins complexe souhaitable. Pour ce qui est du nombre des pixels sélectionnés, il suffit que ce nombre soit suffisamment important pour écarter tout risque qu'un tiers puisse les retrouver, mais également suffisamment faible par rapport au nombre total des pixels du capteur pour que la simplification évoquée plus haut soit significative par rapport au traitement de la totalité des pixels de la matrice du capteur. Pour fixer les idées, on pourra en pratique sélectionner un nombre de pixels compris entre 0,1 % et 1 % du nombre total des pixel de la matrice du capteur.

Dans le cas de l'affectation d'une cartographie individuelle à chaque capteur, on constate que, quelle que soit la solution adoptée et eu égard au nombre élevé, voire très élevé de pixels dans une matrice, la probabilité pour que les matrices de deux capteurs possèdent la même cartographie est infime, cette probabilité décroissant de façon exponentielle lorsque la taille de la matrice croît.

En tant que caractéristique, il est possible de choisir une grandeur parmi diverses grandeurs du pixel qui sont disponibles.

Une solution qui semble devoir être intéressante en raison de sa relative simplicité de mise en oeuvre consiste à retenir, en tant que caractéristique, l'état - défectueux ou actif- des pixels de la matrice et à établir une cartographie de tout ou partie des pixels défectueux de la matrice.

Par pixel défectueux, on entend désigner un pixel dont au moins une grandeur ne correspond pas à ce qu'elle devrait être pour que le pixel soit fonctionnel et/ou n'entre pas dans une fourchette de tolérance préétablie pour un pixel fonctionnel : le pixel ne peut pas alors produire une image ou un signal exploitable par l'équipement situé en aval. Les défauts peuvent être de divers types, notamment :
- pixel "mort" : il s'agit d'un pixel totalement insensible à une modulation de scène, qui appartient à l'un des sous-types suivants :
   . pixel déconnecté (le pixel n'est plus en liaison électrique avec le circuit de lecture et aucun signal n'est délivré),
   . pixel en court-circuit (le signal délivré est d'un niveau tellement élevé qu'il est saturant) ;
- pixel bruyant, qui appartient à l'un des sous-types suivants :
   . pixel ayant un bruit moyen excédentaire (valeur moyenne dans toute la bande de bruit), c'est-à-dire supérieure à un seuil maximum admissible (par exemple deux fois la moyenne du bruit sur l'ensemble de la matrice du capteur),
   . pixel ayant un bruit à très basse fréquence excédentaire (un seuil acceptable est défini), ou pixel "clignotant" ;
- pixel hors dynamique : il s'agit d'un pixel dont le gain et/ou le niveau diffère significativement de la moyenne des pixels de la matrice et qui par conséquent sature pour des températures de scène très différentes de celles saturant les autres pixels (à ces températures, il devient équivalent à un pixel mort) .

On peut donc envisager une cartographie de pixels défectueux, par exemple possédant un des défauts précités ou une combinaison de certains de ces défauts, à titre de signature affectable au capteur.

Un cas qui peut apparaître simple à mettre en oeuvre consiste à traiter les pixels défectueux dits "morts". De fabrication, une matrice peut contenir entre 1 % et 0,1 % de pixels défectueux dits morts, qui sont répartis aléatoirement au sein de la matrice. Pour une matrice de 100 000 pixels, le nombre des pixels morts aléatoirement répartis est ainsi de l'ordre de 100 à 1000, ce qui est suffisant pour que la cartographie établie sur tout ou partie de ces pixels naturellement morts constitue une signature fiable pour le capteur considéré. Un intérêt supplémentaire de cette solution réside dans l'impossibilité d'une régression du nombre de pixels morts ; ce nombre pourra certes augmenter dans le temps et au cours de la vie du capteur, mais la cartographie inclura toujours au moins la cartographie initiale qui restera donc identifiable au cours de la vie du capteur.

Toutefois, dans certaines fabrications, le nombre des pixels naturellement défectueux est trop faible, avec plus de 80 % des matrices qui possèdent moins de 0,02 % de pixels défectueux : il devient alors difficile de constituer une signature significative avec une cartographie portant sur un nombre aussi réduit de pixels défectueux.

Pour pallier cette difficulté, dans une variante intéressante du procédé conforme à l'invention, on ne se contente pas de localiser et de comptabiliser des pixels naturellement défectueux, mais on prévoit de créer, dans le capteur, des pixels défectueux agencés en un réseau spécifique susceptible de faire office de signature. Avantageusement, ces pixels défectueux sont créés dans au moins une zone particulière du capteur. Cette démarche est basée sur le fait qu'il est fréquent que tous les pixels d'un capteur ne soient pas utilisés et que des zones du capteur, notamment des bordures du capteur, demeurent inutilisées. Par exemple, dans un exemple typique d'un capteur formé d'une matrice de 320 x 256 pixels, on peut disposer des 16 lignes du haut et du bas s'il est utilisé en matrice de 320 x 240 pixels ou bien on peut disposer des 64 colonnes de gauche et de droite s'il est utilisé en matrice de 256 x 256 pixels. Dans le cas où la matrice du capteur est utilisée en totalité, on peut sacrifier une ligne et/ou une colonne en bordure du capteur : le champ est certes réduit, mais seulement de 0,3 % environ dans le cas d'une matrice de 384 x 288 pixels qui serait exploitée en matrice de 383 x 287 pixels, ce qui reste tout à fait compatible avec les besoins.

Dans le contexte de la création de pixels défectueux, on envisage plus spécifiquement de créer un réseau de pixels défectueux particuliers, à savoir des pixels déconnectés. Ces pixels déconnectés sont particulièrement intéressants car ils sont sans ambiguïté, contrairement aux pixels morts présents naturellement dans la matrice. En effet, une déconnexion (circuit ouvert) est facile à détecter, que ce soit dans le signal de sortie (par un niveau saturé haut ou bas) ou dans l'image non corrigée (ces pixels sont situés en haut ou en bas de la dynamique des niveaux de gris), au contraire d'un pixel défectueux du type pixel mort qui est peu sensible et/ou trop bruyant. Il est même possible de détecter un pixel déconnecté sans amener le capteur à sa température nominale de fonctionnement.

Un pixel déconnecté ou connecté est assimilable à un bit prenant les valeurs 0 ou 1 respectivement. Si on sacrifie, dans la matrice du capteur, une ligne de 320 pixels, on dispose donc de 320 bits pour le codage. Si on sacrifie une zone de périphérie entre le format 320 x 256 pixels de la matrice intégrale et le format 320 x 240 de la matrice telle qu'utilisée, on dispose alors de 16 x 320, soit 5120 bits pour le codage, ce qui est amplement suffisant pour les besoins d'un codage.

On peut envisager de créer ce type de défauts de façon identique dans tous les capteurs, autrement dit d'organiser les pixels déconnectés de façon identique dans tous les capteurs qui présenteront donc la même cartographie de pixels déconnectés. Il pourra s'agir par exemple de tous les capteurs provenant d'un même fournisseur et la cartographie commune pourra représenter une signature de ce fournisseur.

Pour ce faire, on peut utiliser, dans le processus de fabrication du capteur, un masque de photolithographie spécifique incluant la topographie des pixels devant rester déconnectés. Ce code topographique est inscrit dans la définition du masque individuel du capteur et répété pour chaque capteur dans le masque de la plaque semi-conductrice (plaque détecteur ou plaque multiplexage). Dans le cas de capteurs hybridés sur un circuit de lecture à l'aide de billes d'indium ou analogues, il est possible par exemple d'inclure ce code topographique dans le ou les photomasques utilisés pour le dépôt des billes d'indium. D'autres solutions sont envisageables (par exemple lors du dépôt de couches métalliques de contact, ...).

On peut envisager de détromper ce code unique commun en lui adjoignant une information complémentaire, permettant de singulariser les capteurs. Ainsi, il est possible de prévoir des masques de photolithographie dont les motifs seraient différents les uns des autres dans les zones des capteurs affectées au codage. Par exemple ces informations supplémentaires pourraient être les coordonnées du capteur dans la plaque semi-conductrice (plaque du circuit de lecture ou plaque du détecteur). Alors, chaque capteur serait, par le biais de pixels déconnectés cartographiés de façon appropriée, affecté d'une signature représentative du fournisseur et de sa position (ligne - colonne) dans la plaque semi-conductrice dont il est issu.

Par contre, la mise en place d'une signature individuelle dans chaque capteur, par le biais d'une cartographie individuelle de pixels déconnectés, ne peut être obtenue que par la mise en oeuvre d'une phase individuelle dans le processus de fabrication, au prix d'une complication sensible dudit processus de fabrication.

On peut aussi prévoir, pour accroître la sécurité d'identification d'un capteur, de multiplier le code de signature dans un même capteur, en plusieurs emplacements de celui-ci.

Bien entendu, il est possible de prévoir de combiner des pixels défectueux créés avec des pixels défectueux naturels à des fins d'augmentation du nombre des pixels défectueux et/ou de complication de la cartographie des pixels défectueux, et donc finalement dans le but d'augmenter la sécurisation de la signature affectée au capteur.

Des caractéristiques des pixels autres que l'état défectueux des pixels peuvent être sélectionnées pour être exploitées dans le contexte de l'invention, telles que la valeur d'offset du pixel, le niveau de bruit du pixel, le gain du pixel, .... Parmi celles-ci, le gain semble constituer une caractéristique pertinente en raison de sa très grande stabilité dans le temps. Toutefois, il faut aussi considérer que les cartographies basées sur de telles caractéristiques des pixels sont modifiées par les caractéristiques optiques du système utilisateur du fait :
- de la transmission optique et de son uniformité dans le champ,
- de la bande spectrale et de son uniformité dans le champ,
- de la présence éventuelle de vignettage,
- ........
   et sont susceptibles d'évoluer dans le temps, par exemple lorsque :
   - le rendement quantique du capteur évolue,
   - le vide du cryostat, dans le cas de capteurs refroidis, se dégrade au point que de la condensation apparaît sur le plan focal,
   - ......

On soulignera qu'un intérêt de choisir en tant que caractéristique une des grandeurs propres aux pixels tient au fait que ces grandeurs sont déjà déterminées pour permettre la mise en oeuvre des capteurs : la localisation des pixels morts est connue ; les valeurs de gain, d'offset, de bruit sont mesurées pour chaque pixel et sont utilisées pour la détermination du gain, de l'offset, du bruit du capteur. Il suffit ainsi de traiter en tant que signatures ces informations déjà disponibles.

Il est également possible d'envisager de sélectionner, en tant que caractéristique du pixel, une donnée non immédiate, résultant de la mise en oeuvre d'un processus préétabli. Notamment, on peut envisager un processus comparatif, tel que celui consistant à relever une cartographie initiale d'une caractéristique des pixels placés dans une condition donnée (par exemple à une température donnée), à modifier ladite condition (par exemple à faire évoluer la température) et à relever la cartographie finale de cette caractéristique des pixels, et enfin à retenir comme signature du capteur la cartographie résultant de la comparaison des cartographies initiale et finale.

A titre d'exemple, on peut envisager ce qui suit : on établit une cartographie de défauts du capteur pour la température de référence du plan focal ; on décale ensuite vers des températures plus chaudes le point de fonctionnement du refroidisseur et on mesure une nouvelle cartographie des défauts, laquelle inclut les défauts initiaux accrus de défauts supplémentaires induits par l'élévation de température du plan focal. La signature affectable au capteur pourra alors être la cartographie des défauts supplémentaires (c'est-à-dire la différence entre les cartographies finale et originelle).

Toujours à titre d'exemple, on peut également envisager d'appliquer le processus précédent en décalant de sa valeur nominale tout autre paramètre, par exemple le point de polarisation des photodiodes.

Toujours à titre d'exemple, on peut aussi établir une cartographie de points saturants lorsque le capteur (seul ou en place dans un matériel) est exposé à une scène de température proche de la saturation (de la même manière que les pixels possèdent des gains ou des valeurs d'offset différents, ils ont également des seuils de saturation différents).

Bien entendu, on peut constituer des signatures durcies en combinant plusieurs solutions possibles.

## Revendications

1. Procédé d'identification d'un capteur matriciel infrarouge, selon lequel, pour au moins certains des pixels de la matrice du capteur, on relève une information relative à la position du pixel dans la matrice et on détermine une information relative à au moins une caractéristique de chacun desdits pixels et on tient en mémoire l'ensemble des couples de ces informations associées auxdits pixels respectifs, dite cartographie, en tant qu'identifiant du capteur.

2. Procédé selon la revendication 1, **caractérisé en ce qu**e la cartographie tenue en mémoire est codée.

3. Procédé selon la revendication 1 ou 2, **caractérisé en ce que** la cartographie concerne la totalité des pixels de la matrice possédant ladite caractéristique.

4. Procédé selon la revendication 1 ou 2, **caractérisé en ce que** la cartographie concerne seulement certains, choisis en emplacement, des pixels de la matrice possédant ladite caractéristique.

5. Procédé selon l'une quelconque des revendications 1 à 4, **caractérisé en ce que** la caractéristique est l'état défectueux du pixel.

6. Procédé selon la revendication 5, **caractérisé en ce que** l'état défectueux du pixel est l'état mort du pixel, les pixels morts étant répartis aléatoirement dans la matrice du capteur.

7. Procédé selon la revendication 5, **caractérisé en ce que** l'état défectueux du pixel est l'état déconnecté du pixel.

8. Procédé selon la revendication 7, **caractérisé en ce qu**'on déconnecte des pixels dans au moins une zone prédéterminée de la matrice du capteur.

9. Procédé selon la revendication 8, **caractérisé en ce qu**'on déconnecte des pixels dans au moins une zone prédéterminée de la matrice du capteur selon une cartographie préétablie.

10. Procédé selon la revendication 9, **caractérisé en ce qu**'on déconnecte des pixels dans au moins une zone prédéterminée de la matrice du capteur selon une cartographie préétablie qui constitue une signature du fournisseur du capteur et/ou une signature individuelle du capteur lui-même.

11. Procédé selon l'une quelconque des revendications 1 à 4, **caractérisé en ce que** la caractéristique est le gain du pixel.

12. Procédé selon l'une quelconque des revendications 1 à 4, **caractérisé en ce que** la caractéristique est la valeur d'offset du pixel.

13. Procédé selon l'une quelconque des revendications 1 à 4, **caractérisé en ce que** la caractéristique est le niveau de bruit du pixel.

14. Procédé selon l'une quelconque des revendications 1 à 4, **caractérisé en ce qu'**on relève une cartographie initiale d'une caractéristique des pixels placés dans une condition donnée, on modifie ladite condition et on relève la cartographie finale de cette caractéristique des pixels, et on retient comme signature la cartographie résultant de la comparaison des cartographies initiale et finale.

## Claims

1. Method of identifying an infrared matrix sensor, wherein, for at least some of the pixels of the sensor matrix, data relating to the position of the pixel in the matrix is detected and data relating to at least one characteristic of each of said pixels is determined, and all of the pairs of these data associated with said respective pixels, said mapping, are kept in memory as sensor identifier information.

2. Method according to Claim 1, **characterized in that** the mapping kept in memory is encoded.

3. Method according to Claim 1 or 2, **characterized in that** the mapping relates to all the pixels of the matrix having said characteristic.

4. Method according to Claim 1 or 2, **characterized in that** the mapping relates only to some, chosen by location, of the pixels of the matrix having said characteristic.

5. Method according to any one of Claims 1 to 4, **characterized in that** the characteristic is the defective state of the pixel.

6. Method according to Claim 5, **characterized in that** the defective state of the pixel is the dead state of the pixel, the dead pixels being distributed randomly in the sensor matrix.

7. Method according to Claim 5, **characterized in that** the defective state of the pixel is the disconnected state of the pixel.

8. Method according to Claim 7, **characterized in that** pixels are disconnected in at least one predetermined area of the sensor matrix.

9. Method according to Claim 8, **characterized in that** pixels are disconnected in at least one predetermined area of the sensor matrix according to a previously established mapping.

10. Method according to Claim 9, **characterized in that** pixels are disconnected in at least one predetermined area of the sensor matrix according to a previously established mapping which constitutes a signature of the supplier of the sensor and/or an individual signature of the sensor itself.

11. Method according to any one of Claims 1 to 4, **characterized in that** the characteristic is the gain of the pixel.

12. Method according to any one of Claims 1 to 4, **characterized in that** the characteristic is the offset value of the pixel.

13. Method according to any one of Claims 1 to 4, **characterized in that** the characteristic is the noise level of the pixel.

14. Method according to any one of Claims 1 to 4, **characterized in that** an initial mapping of one characteristic of the pixels placed in a given condition is recorded, said condition is modified, and the final mapping of said characteristic of the pixels is recorded, and the mapping resulting from the comparison of the initial and final mappings is retained as signature.

## Patentansprüche

1. Identifikationsverfahren eines Infrarot-Matrixsensors gemäß welchem man für mindestens bestimmte der Pixel der Matrix des Sensors eine Information in Zusammenhang mit der Position des Pixels in der Matrix misst und eine Information in Zusammenhang mit mindestens einem Merkmal jedes der Pixel bestimmt und die Einheit der Paare dieser Informationen, die mit den jeweiligen Pixeln zusammenhängen, Kartografie genannt, als Identifikator des Sensors speichert.

2. Verfahren nach Anspruch 1, **dadurch gekennzeichnet, dass** die im Speicher abgelegte Kartografie codiert ist.

3. Verfahren nach Anspruch 1 oder 2, **dadurch gekennzeichnet, dass** die Kartografie sämtliche Pixel der Matrix, die das Merkmal besitzen, betrifft.

4. Verfahren nach Anspruch 1 oder 2, **dadurch gekennzeichnet, dass** die Kartografie nur bestimmte der Pixel der Matrix, die das Merkmal besitzen, die an einer Lage ausgewählt werden, betrifft.

5. Verfahren nach einem der Ansprüche 1 bis 4, **dadurch gekennzeichnet, dass** das Merkmal der defekte Zustand des Pixels ist.

6. Verfahren nach Anspruch 5, **dadurch gekennzeichnet, dass** der defekte Zustand des Pixels der ausgefallene Zustand des Pixels ist, wobei die ausgefallenen Pixel willkürlich in der Matrix des Sensors verteilt werden.

7. Verfahren nach Anspruch 5, **dadurch gekennzeichnet, dass** der defekte Zustand des Pixels der abgeschaltete Zustand des Pixels ist.

8. Verfahren nach Anspruch 7, **dadurch gekennzeichnet, dass** man Pixel in mindestens einer vorbestimmten Zone der Matrix des Sensors abschaltet.

9. Verfahren nach Anspruch 8, **dadurch gekennzeichnet, dass** man Pixel in mindestens einer vorbestimmten Zone der Matrix des Sensors gemäß einer vorab erstellten Kartografie ausschaltet.

10. Verfahren nach Anspruch 9, **dadurch gekennzeichnet, dass** man Pixel in mindestens einer vorbestimmten Zone der Matrix des Sensors gemäß einer vorab erstellten Kartografie abschaltet, die eine Signatur des Lieferanten des Sensors und/oder eine Einzelsignatur des Sensors selbst bildet.

11. Verfahren nach einem der Ansprüche 1 bis 4, **dadurch gekennzeichnet, dass** das Merkmal die Verstärkung des Pixels ist.

12. Verfahren nach einem der Ansprüche 1 bis 4, **dadurch gekennzeichnet, dass** das Merkmal der Offsetwert des Pixels ist.

13. Verfahren nach einem der Ansprüche 1 bis 4, **dadurch gekennzeichnet, dass** das Merkmal der Rauschpegel des Pixels ist.

14. Verfahren nach einem der Ansprüche 1 bis 4, **dadurch gekennzeichnet, dass** man eine anfängliche Kartografie eines Merkmals der Pixel misst, die auf einen gegebenen Zustand gestellt sind, dass man den Zustand ändert und die abschließende Kartografie dieses Merkmals der Pixel misst und als Signatur die Kartografie auswählt, die sich aus dem Vergleich der anfänglichen Kartografie mit der abschließenden Kartografie ergibt.
